# EUROPEAN PATENT APPLICATION

(11) **EP 1 591 998 A2**
(43) Date of publication of application: **02.11.2005**
(21) Application number: 05252600.1
(22) Date of filing: 26.04.2005
(51) Int. Cl.: G11B 7/007, G11B 27/19, G11B 27/30

(54) **Optical disk device**

(30) Priority: 27.04.2004 JP 2004130797
(71) Applicant: TEAC CORPORATION, Tokyo 180-8550 (JP)
(72) Inventor: Mashimo, Akira, Tokorozawa-shi, Saitama-ken (JP)
(74) Representative: Rees, Alexander Ellison

(57) **Abstract**

An optical disk device which uses address information to perform a checking process on an optical disk. In an HD-DVD optical disk, data is recorded in both grooves and lands. A groove (G) track address system which is exclusively used for a groove is formed in a groove track and a land (L) track address system which is exclusively used for a land is formed in a land track. When the address of a target groove track is determinate and fixed to n, the optical disk device reads address information of the L track address system in the groove track and determines whether or not the address which is read corresponds to n or n-1. When the address which is read corresponds to n or n-1, the optical disk is determined to be normal. When the address which is read does not correspond to n or n-1, it is determined that the optical disk is defective.

## Description

### BACKGROUND OF THE INVENTION

### Field of the Invention

The present invention relates to an optical disk device, and more particularly to a high-definition optical disk device which uses grooves and lands for data recording and reproduction.

### Description of Related Art

A format for HD (High-Definition) DVDs has been proposed for adoption in the next generation of DVDs. It is intended that the HD-DVDs adopt the same disk structure as current DVDs so as to ensure compatibility, while simultaneously achieving higher density data recording than that of previous generation DVDs.

As one main feature, HD-DVDs adopt the land/groove recording method in which information is recorded in both lands and grooves. Land tracks and groove tracks are formed in wobbles, in which address information is embedded. More specifically, address information is expressed using phase modulation in such a manner that four waves having a phase of 0 degree represent "0" and four waves having a phase of 180 degrees represent "1". Here, a plurality of, in this case, four, waves having the identical phase (in-phase waves) are provided in order to increase the accuracy of address information detection by means of redundancy. For the address information to be embedded in the form of wobbles, binary data is converted into a gray code in which the distance between codes (inter-code distance) for adjacent sets of binary data, that is, the number of inverted bits, is equal to 1. Accordingly, in gray code, address "0" is represented as "00000000"; address "1" is represented as "00000001"; address "2" is repented as "00000011"; address "3" is represented as "00000010"; address "4" is represented as "00000110", and so on.

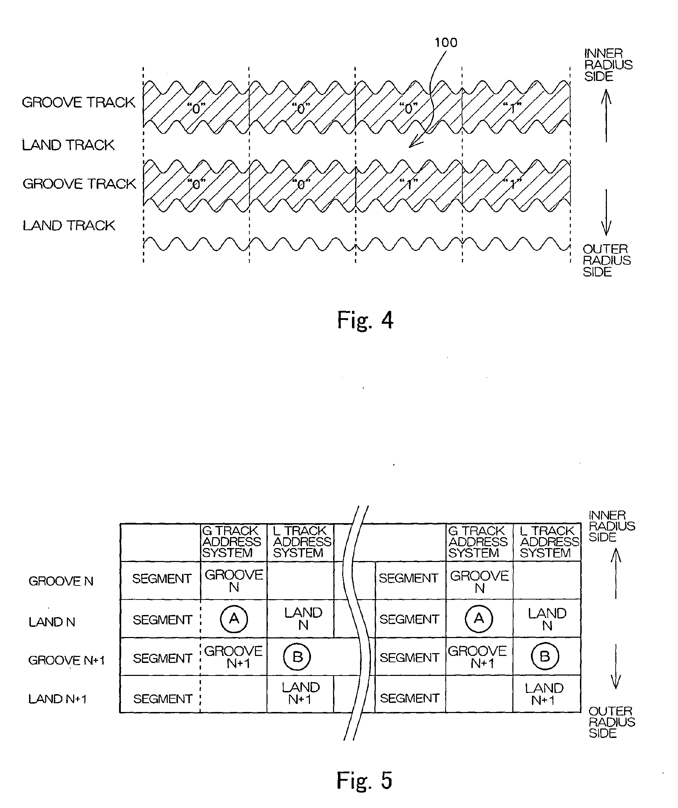

Wobbles of an HD-DVD are shown schematically in Fig. 4. In one groove track, with a combination "0" represented by wobbles in a phase of 0 degrees both at the inner radius and the outer radius of the disk and "1" represented by wobbles in a phase of 180 degrees both at the inner radius and the outer radius of the disk, address information of "0001" is embedded. In the next groove track, address information of "0011" is embedded in a similar manner, with a combination of "0" and "1" represented by wobbles having phases of 0 and 180 degrees, respectively. In the land track disposed between these two groove tracks, however, wobbles at the inner radius and wobbles at the outer radius become out of phase with respect to each other at the inversed bit position of the contiguous groove track (the bit position 100 in Fig. 4), where a wobble signal cannot be specified.

In order to address the above problem, HD-DVDs include respective regions where the land track address and the groove track address are to be exclusively embedded. These regions are provided such that they are displaced from each other in the track direction, whereby the land track address and the groove track address are formed. When reading address information of a land track, the exclusive region for groove is skipped and the track address in the exclusive region for land that follows the exclusive groove region is read.

Fig. 5 schematically shows the address structure of an HD-DVD. Referring to Fig. 5, the exclusive regions for grooves and lands are indicated as "G track address systems" and "L track address systems", respectively. Each of the groove tracks and the land tracks is divided into a plurality of segments in the track direction. The segment addresses are sequentially assigned for each track along the whole circumference of the disk and are then reset for the following track. Consequently, segment 1 of Groove N is adjacent to segment 1 of Land N, which is then adjacent to segment 1 of Groove N+1.

In the G track address system of groove N, address "N" is embedded only with wobbles which are in phase with each other (in-phase wobbles), and in the L track address system of the adjacent land N, address "N" is embedded only with in-phase wobbles. Thus, when tracing the groove track N (groove N), the segment and a wobble signal in the G track address system are reproduced. When tracing the land track N (land N), after reading the segment, the G track address system is skipped and a wobble signal in the L track address system is reproduced, thereby obtaining address information. Such an address structure for HD-DVDs is disclosed in, for example, the October 13, 2003 issue of "Nikkei Electronics" (Nikkei BP, October 13, 2003), pp. 126-134.

As described above, the address structure of HD-DVDs includes G track address systems and L track address systems. Basically, the address information is read from the G track address system when tracing a groove, and the address information is read from the L track address system when tracing a land. Consequently, the L track address system at the time of groove tracing and the G track address system at the time of land tracing are not used and are therefore regarded as wasted or inefficient regions.

### SUMMARY OF THE INVENTION

The present invention provides an optical disk device which can make effective use of information from an L track address system at the time of groove tracing and information from a G track address system at the time of land tracing.

In accordance with one aspect of the present invention, there is provided an optical disk device for recording and reproducing data with respect to grooves and lands of an optical disk in which address information is embedded by forming the grooves and the lands in wobbles, the address information being embedded after conversion into a gray code in which a distance between codes for two consecutive address values is equal to 1, in which the address information of the groove includes two address systems, which are a groove track address system defined by in-phase wobbles wherein the phase of the wobble on the inner radius side and the phase of the wobble on the outer radius side, forming the groove, are identical and a land track address system defined by including opposite-phase wobbles wherein the phase of the wobble on the inner radius side and the phase of the wobble on the outer radius side, forming the groove, are reversed, and the address information of the land includes two address systems, which are a land track address system defined by in-phase wobbles wherein the phase of the wobble on the inner radius side and the phase of the wobble on the outer radius side, forming the land, are identical and a groove track address system defined by including opposite-phase wobbles wherein the phase of the wobble on the inner radius side and the phase of the wobble on the outer radius side, forming the land, are reversed, the optical disk device comprising address reading means for reproducing the wobble of the land track address system to read address information when tracing a groove track; and determination means for determining that the land track address system is normal when the address information satisfies a predetermined relationship and determining that the land track address system is defective when the address information does not satisfy the predetermined relationship.

In accordance with another aspect of the present invention, there is provided an optical disk device for recording and reproducing data with respect to grooves and lands of an optical disk in which address information is embedded by forming the grooves and the lands in wobbles, the address information being embedded after conversion into a gray code in which a distance between codes for two consecutive address values is equal to 1, in which the address information of the groove includes two address systems, which are a groove track address system defined by in-phase wobbles wherein the phase of the wobble on the inner radius side and the phase of the wobble on the outer radius side, forming the groove, are identical and a land track address system defined by including opposite-phase wobbles wherein the phase of the wobble on the inner radius side and the phase of the wobble on the outer radius side, forming the groove, are reversed, and the address information of the land includes two address systems, which are a land track address system defined by in-phase wobbles wherein the phase of the wobble on the inner radius side and the phase of the wobble on the outer radius side, forming the land, are identical and a groove track address system defined by including opposite-phase wobbles wherein the phase of the wobble on the inner radius side and the phase of the wobble on the outer radius side, forming the land, are reversed, the optical disk device comprising address reading means for reproducing the wobble of the groove track address system to read address information when tracing a land track; and determination means for determining that the groove track address system is normal when the address information satisfies a predetermined relationship and determining that the groove track address system is defective when the address information does not satisfy the predetermined relationship.

In an HD-DVD optical disk, a groove track includes G track address systems and L track address systems formed therein, as shown in Fig 5. Here, the L track address system in a groove track includes opposite-phase wobbles, and therefore has one bit position which is undefined. However, data at this opposite-phase wobble position can be forcedly read as either 0 or 1. If the address of a groove track is determinate and fixed, the position of the opposite-phase wobbles in the L track address system of this groove track can be uniquely specified. Consequently, two possible candidate addresses defined when the value at the opposite-phase wobble position is 0 and 1, respectively, can be obtained. If the L track address system is formed normally, the address information obtained by this L track address system should correspond to a value of either one of the two possible addresses. Accordingly, if the address information which is actually read from the L track address system corresponds to either candidate address, it is possible to determine that the L track address system, thus the optical disk, is normal. More specifically, when the groove track address is n, the possible address data of the L track address system in this groove track is either n or n-1. Then, if the address information actually obtained from the L track address system corresponds to either of these values, the L track address system can be determined to be normal. Similarly, a land track includes G track address systems and L track address systems formed therein. Here, the G track address system of a land track includes opposite-phase wobbles, and therefore has one bit position which is undefined. However, data at this opposite-phase wobble position can be forcedly read as either 0 or 1. If the address of a land track is determinate and fixed, the position of the opposite-phase wobbles in the G track address system of this land track can be uniquely specified. Consequently, two possible candidate addresses defined when the value at the opposite-phase wobble position is 0 and 1, respectively, can be obtained. If the G track address system is formed normally, the address information obtained by the G track address system should correspond to either one of the two possible addresses. Accordingly, when the address information which is actually read from the G track address system corresponds to either possible address, it is possible to determine that the G track address system, and, thus, the optical disk, is normal. More specifically, when the land track address is n, the possible address data of the G track address system in this land track is either n or n+1. Then, if the address information actually obtained from the G track address system corresponds to either of these values, it can be determined that the G track address system is normal.

### BRIEF DESCRIPTION OF THE DRAWINGS

A preferred embodiment of the present invention will be described in further detail based on the following drawings, wherein:
Fig. 1 is a diagram showing the overall structure of an optical disk device according to one embodiment of the present invention;
Fig. 2 is a diagram for explaining the principle of a check according to the embodiment of the present invention;
Fig. 3 is a flowchart of a check process according to the embodiment of the present invention;
Fig. 4 is an explanatory view of wobbles of an optical disk (HD-DVD); and
Fig. 5 is an explanatory view of track addresses of an optical disk (HD-DVD).

### DETAILED DESCRIPTION OF PREFERRED EMBODIMENT

A preferred embodiment of the present invention will be described in detail with reference to the accompanying drawings.

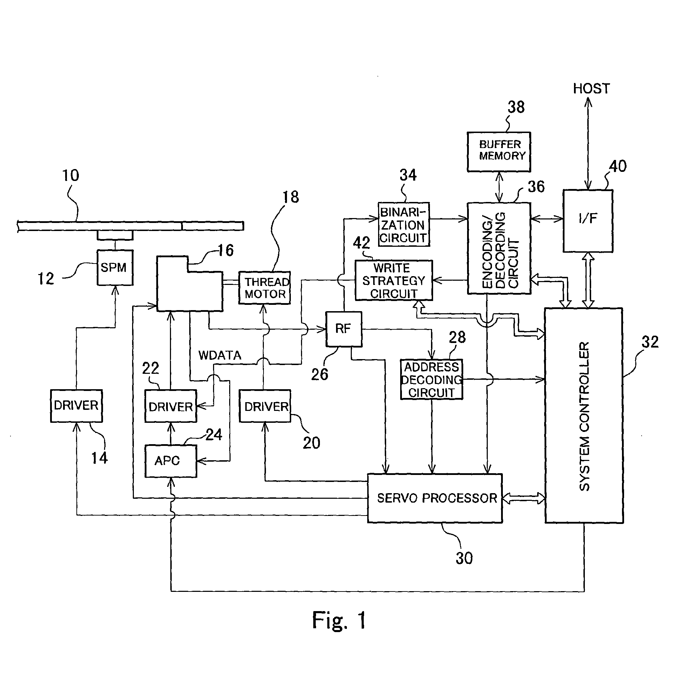

Fig. 1 shows the overall structure of an optical disk device according to the preferred embodiment. An optical disk 10 is rotated by a spindle motor (SPM) 12. The spindle motor SPM 12 is in turn driven by a driver 14, which, in turn, is servo-controlled by a servo processor 30 so as to operate at a desired rotation rate. In the example used to illustrate the embodiment, the driver 14 divides the optical disk 10 into a plurality of zones from the inner radius to the outer radius, and drives the spindle motor SPM so as to achieve a constant angular velocity in each zone (ZCAV).

An optical pickup 16, which includes a laser diode (LD) for irradiating laser light onto the optical disk 10 and a photo detector (PD) for receiving and converting light reflected from the optical disk 10 into an electric signal, is disposed opposite the optical disk 10. The optical pickup 16 is driven, by a thread motor 18, in the radial direction of the optical disk 10. The thread motor 18 is driven by a driver 20, which is servo-controlled by the servo processor 30 in the same manner as the driver 14. Further, the LD of the optical pickup 16 is driven by the driver 22, which is controlled by an auto power control circuit (APC) 24 such that a drive current assumes a desired value. Specifically, the APC 24 controls the drive current of the driver 22 such that it becomes the optimum recording power selected by OPC (Optimum Power Control) which is performed in a test area (PCA) of the optical disk 10. The OPC is a process in which test data is recorded on the PCA of the optical disk 10 while changing the recording power stepwise, and then the test data is reproduced for evaluation of the signal quality, so that the recording power with which the desirable signal quality can be obtained is selected. As an index of signal quality, a β value and a y value, a degree of modulation, jitter, or the like is used.

When reproducing the data recorded on the optical disk 10, laser light of reproduction power is emitted from the LD of the optical pickup 16, and the light reflected on the disk is converted into an electrical signal by the PD and output. A reproduction signal from the optical pickup 16 is supplied to an RF circuit 26, which generates a focus error signal and a tracking error signal from the reproduction signal and supplies these signals to the servo processor 30. The servo processor 30 servo controls the optical pickup 16 based on these error signals and retains the optical pickup 16 in the on-focus and on-track conditions.

The optical pickup 16 performs recording and reproduction with respect to grooves and lands of the optical disk 10. The grooves are formed helically on the optical disk 10. Data is recorded and reproduced with regard to the grooves and lands alternately, in the sequence of groove 1 → land 1 → groove 2 → land 2 → groove 3 → land 3 → ..., for example. Alternatively, it is also possible that, for each zone, recording and reproduction be performed with respect to all the grooves within the zone, and that recording and reproduction then be performed with respect to all the lands within the same zone. Thus, for each zone, recording and reproduction is performed with respect to the lands after recording and reproduction is performed with respect to the grooves. Further, the RF circuit 26 supplies an address signal (a wobble signal) contained in the reproduction signal to an address decoding circuit 28. The address decoding circuit 28 demodulates the address signal to obtain address data of the optical disk 10, and supplies the demodulation data to the servo processor 30 and a system controller 32. The address data is embedded in the grooves and lands of the optical disk 10 in the form of wobbles. The optical disk 10 includes a segment address and a track address as the address data. The address data has been subjected to phase modulation such that four waves having a phase of 0 degrees represent "0" and four waves having a phase of 180 degrees represent "1", and is formed in the optical disk 10 in a gray code. These four in-phase wobbles form a redundant system.

The address format of the optical disk 10 is composed of two address systems, as described above. One of the address systems, hereafter referred to as a "groove (G) track address system", detects a groove track address exclusively, while the other address system detects a land track address exclusively (which system will therefore be referred to as "land (L) track address system"). Both the G track address system and the L track address system are formed in groove tracks along the track direction. Similarly, both the G track address system and the L track address system are formed in land tracks along the track direction. The address can be detected from a wobble signal contained in a reproduced signal in the G track address system of the groove track and in the L track address system of the land track where wobbles are always adjusted in phase with each other.

The RF circuit 26 supplies a reproduction RF signal to a binarization circuit 34. The binarization circuit 34 binarizes (digitizes as binary data) the reproduced signal and supplies the resulting signal to an encode/decode circuit 36. The binary signal is then subjected to demodulation and error correction in the encode/decode circuit 36 to obtain reproduction data, which is output to a host device, such as a personal computer, via an interface I/F 40. Here, the encode/decode circuit 36 temporarily stores the reproduction data in a buffer memory 38 before outputting the reproduction data to the host device.

On the other hand, for recording data onto the optical disk 10, data to be recorded is supplied from the host device to the encode/decode circuit 36 via the interface I/F 40. The encode/decode circuit 36 stores the data to be recorded in the buffer memory 38, and then encodes and supplies the data to be recorded, as modulation data (ETM (Eight to Twelve Modulation) data), to a write strategy circuit 42. The write strategy circuit 42 converts the modulation data into multi-pulses (a pulse train) in accordance with a predetermined recording strategy, and supplies the multi-pulses, as recording data, to the driver 22. The recording strategy is constituted by pulse widths of a leading pulse or subsequent pulses in multi-pulses and the pulse duty, for example. The recording strategy, which affects recording quality, is generally fixed to a certain optimum strategy, and may be set during optimum power control (OPC). Then, the laser light whose power was modulated according to the recording data is emitted from the LD of the optical pickup 16 onto the optical disk 10 for recording the data. After the data is recorded as described above, the optical pickup 16 emits laser light of reproducing power so as to reproduce the recorded data, and outputs the reproduced data to the RF circuit 26. The RF circuit 26 supplies the reproduction signal to the binarization circuit 34 where the data is binarized and supplied to the encode/decode circuit 36. The encode/decode circuit 36 decodes the modulation data and verifies the thus-decoded data against the recording data stored in the buffer memory 38. The result of verification is supplied to the system controller 32, which determines, in accordance with the verification result, whether to continue data recording or perform alternation operation.

With the structure as described above, when, in order to record or reproduce data with respect to the grooves, a groove track is traced and the address information detected by the address decoding circuit 28 is supplied to the system controller 32, the address information can be detected by detecting four in-phase waves of the G track address system. Further, when, in order to record or reproduce data with respect to the lands, a land track is traced and the address information detected by the address decoding circuit 28 is supplied to the system controller 32, the address information can be detected by detecting four in-phase waves of the L track address system. In this case, while the L track address systems at the time of groove tracing and the G track address systems at the time of land tracking are not used, as these address systems also include in-phase wobbles (actually, opposite-phase wobbles are included only at one bit position), the address information can similarly be read from these address systems by forcedly reading the data at the opposite-phase wobble position.

Accordingly, in the present embodiment, at the time of groove tracing, in addition to the G track address systems, the L track address systems are also read and the address information of the L track address systems thus read is used for checking the optical disk 10 itself. Similarly, at the time of land tracing, in addition to the L track address systems, the G track address systems are also read and the address information of the G track address systems thus read is used for checking the optical disk 10 itself.

The basic principle of the checking process is as follows. Specifically, at the time of groove tracing, if a target groove track address is determinate and fixed based on continuity with the previous track address or the like, the position of opposite-phase wobbles of the L track address system in this groove track can be specified, and the address data at this opposite-phase wobble poison can be either 0 or 1. Thus, possible address information of the L track address system can be interpolated theoretically. Accordingly, the address information is then actually read from the L track address system, and determination is made as to whether or not the address information thus read corresponds to the interpolated address. If the address information which is read corresponds to the candidate address, it is determined that the optical disk 10 is normal (specifically, the wobbles on the inner radius side and the wobbles on the outer radius side which define the L track address system are correctly formed). If the address information which is read does not correspond to the candidate address, on the other hand, it is determined that the optical disk 10 is defective (specifically, the wobbles on the inner radius side and the wobbles on the outer radius side which define the L track address system are not correctly formed). Similarly, at the time of land tracing, if a target land track address is determinate and fixed based on continuity with the previous track address or the like, the position of opposite-phase wobbles of the G track address system in this land track can be specified, and the address data at this opposite-phase wobble poison can be either 0 or 1. Thus, possible address information of the G track address system can be interpolated from available data. Accordingly, the address information is then actually read from the G track address system, and determination is made as to whether or not the address information thus read corresponds to the interpolated, possible address. If the address information which is read corresponds to the possible address data, it is determined that the optical disk 10 is normal (specifically, the wobbles on the inner radius side and the wobbles on the outer radius side which define the G track address system are correctly formed). If the address information which is read does not correspond to the possible address data, on the other hand, it is determined that the optical disk 10 is defective (specifically, the wobbles on the inner radius side and the wobbles on the outer radius side which define the G track address system are not correctly formed).

The principle of checking according to the present embodiment will be described in further detail.

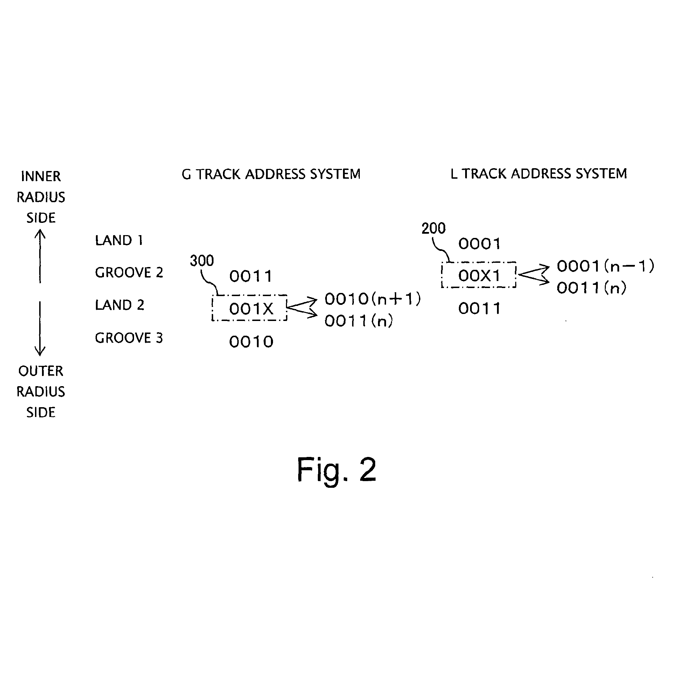

Fig. 2 specifically shows G track address system and L track address system in land 1, groove 2, land 2, and groove 3. In Fig. 2, higher order bits of the address data are omitted and only four lower order bits are shown for convenience of explanation.

Specifically, the L track address system of the land 1 is "0001" in gray code, the G track address system of the groove 2 is "0011" in gray code, the L track address system of the land 2 is "0011" in gray code, and the G track address system of the groove 3 is "0010" in gray code. The L track address system 200 of the groove 2 is defined by the L track address system of the land 1 and the L track address system of the land 2 as "00X1", where X indicates the position of opposite-phase wobbles. More specifically, because the L track address system of the land 1 is "0001" and the L track address system of the land 2 is "0011", the L track address system 200 of the groove 2 includes opposite-phase wobbles at the second bit. For reading the data "00X1", the data value corresponding to "X", which is essentially undefined, is forcedly read as "0" or "1". Accordingly, assuming that the L track address system 200 of the groove 2 is formed correctly, the address data of the L track address system 200 should either be "0001" in which the data value corresponding to "X" is 0 or "0011" in which the data value corresponding to "X" is 1. Specifically, possible address data of the L track address 200 of the groove 2 is "0001" or "0011". Here, when the track address of a certain groove is generalized as n, the address data of the L track address system of the groove can either be n-1 or n.

Similarly, the G track address system 300 of the land 2 is defined by the G track address system of the groove 2 and the G track address system of the groove 3 as "001X", where X indicates the position of opposite-phase wobbles. More specifically, because the G track address system of the groove 2 is "0011" and the G track address system of the groove 3 is "0010", the G track address system 300 of the land 2 includes opposite-phase wobbles at the least significant bit. When reading the data "001X", the data value corresponding to "X", which is essentially undefined, is forcedly read as "0" or "1". Accordingly, assuming that the G track address system 300 of the land 2 is formed correctly, the address data of the G track address system 300 should either be "0010" in which the data value corresponding to "X" is 0 or "0011" in which the data value corresponding to "X" is 1. Specifically, possible data of the G track address 300 of the land 2 is "0010" or "0011". Here, when the track address of a certain land is generalized as n, the address data of the G track address system of the land can either be n or n+1.

As described above, when the address of a groove track is determinate and fixed to n, possible address data of the L track address system in the groove track can be determined to be n or n-1, and if the address of a land track is determinate and fixed to n, possible address data of the G track address system in the land track can be determined to be n or n+1. Consequently, it is possible to check in a simple manner whether or not the address system is normally formed, and thus whether or not the optical disk is normal, by determining whether or not the address which is actually read corresponds to the possible data.

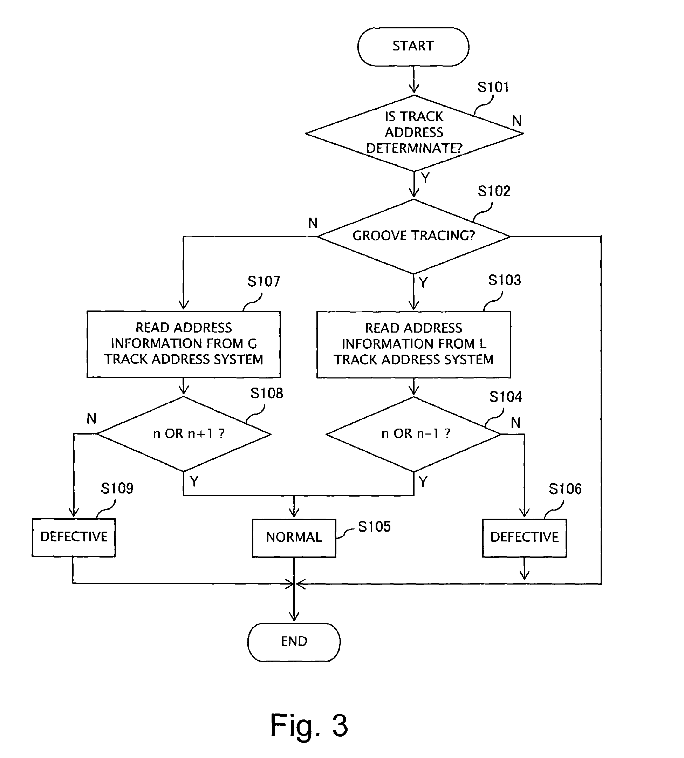

Fig. 3 shows a flowchart of a check process according to the present embodiment. First, the system controller 32 determines whether or not a target track address is already determinate and fixed (S101). Here, if continuity with the previous track is maintained or the like, the track address which was read for the previous track corresponds to the target track address and it is therefore determined that the target track address is determinate. The process then proceeds as described below. However, if the target track address is not determinate, the following process will not be performed because a possible address cannot be fixed, either. For example, when the address of the groove 2 is not determinate in the example shown in Fig. 2, the address information of the G track address system of the groove 2 is read. Here, if the address information read from the G track address system is incorrect, the possible data of the L track address system also includes an error (if the track address n is incorrect, the possible address data n or n-1 also becomes incorrect). It is therefore likely that the L track address system 200, which is originally formed correctly, is misjudged to be incorrect. Here, when it is determined at S101 that the target track address is not determinate, it is possible that the address value which is actually read is stored in a memory and that a process for determining whether or not the address information stored in the memory is correct is performed once the target track address becomes determinate and fixed. This process allows the determination process which is omitted because the target track address is not determinate to be performed, whereby accuracy of the check of the optical disk can be increased.

When the target track address is determinate (which is n) and YES is determined at step S101, it is then determined whether a groove is being traced or a land is being traced (S102). When a groove is being traced, address information is read from the L track address system of the groove track and is supplied to the system controller (S103). The system controller 32 then determines whether or not the address information which is read corresponds to n or n-1 (S104). When the address of the L track address system corresponds to n or n-1, which means that the L track address system is formed correctly, the system controller 32 determines that the optical disk 10 is normal (S105). When the address of the L track address system does not correspond to n or n-1, on the other hand, which means that the L track address system is not formed correctly, the system controller 32 determines that the optical disk 10 is defective (S106).

Further, when it is determined at step S102 that a land is being traced, the address information is read from the G track address system of the land track and is supplied to the system controller 32 (S107). The system controller 32 then determines whether or not the address information which is read corresponds to n or n+1 (S108). When the address of the G track address system corresponds to n or n+1, which means that the G track address system is formed correctly, the system controller 32 determines that the optical disk 10 is normal (S105). When the address of the G track address system does not correspond to n or n+1, on the other hand, which means that the G track address system is not formed correctly, the system controller 32 determines that the optical disk 10 is defective (S109). When it is determined that the optical disk 10 is defective at step S106 or S109, an arbitrary process may be performed. For example, a process in which recording or reproducing of data is interrupted and the optical disk 10 is ejected may be performed.

While the preferred embodiment of the present invention has been described using specific terms, such description is for illustrative purposes only, and it is to be understood that changes and variations may be made without departing from the spirit or scope of the appended claims.

## Claims

1. An optical disk device for recording and reproducing data with respect to grooves and lands of an optical disk in which address information is embedded by forming the grooves and the lands in wobbles, the address information being embedded after conversion into a gray code in which a distance between codes for two consecutive address values is equal to 1, in which
the address information of the groove includes two address systems, which are a groove track address system defined by in-phase wobbles wherein the phase of the wobble on the inner radius side and the phase of the wobble on the outer radius side, forming the groove, are identical and a land track address system defined by including opposite-phase wobbles wherein the phase of the wobble on the inner radius side and the phase of the wobble on the outer radius side, forming the groove, are reversed, and the address information of the land includes two address systems, which are a land track address system defined by in-phase wobbles wherein the phase of the wobble on the inner radius side and the phase of the wobble on the outer radius side, forming the land, are identical and a groove track address system defined by including opposite-phase wobbles wherein the phase of the wobble on the inner radius side and the phase of the wobble on the outer radius side, forming the land, are reversed,
the optical disk device comprising:
address reading means for reproducing the wobble of the land track address system to read address information when tracing a groove track; and
determination means for determining that the land track address system is normal when the address information satisfies a predetermined relationship and determining that the land track address system is defective when the address information does not satisfy the predetermined relationship.

2. An optical disk device according to claim 1, wherein
the determination means determines that the predetermined relationship is satisfied when address information of the groove track which is determinate and fixed is n and the address information of the land track address system is n or n-1.

3. An optical disk device for recording and reproducing data with respect to grooves and lands of an optical disk in which address information is embedded by forming the grooves and the lands in wobbles, the address information being embedded after conversion into a gray code in which a distance between codes for two consecutive address values is equal to 1, in which
the address information of the groove includes two address systems, which are a groove track address system defined by in-phase wobbles wherein the phase of the wobble on the inner radius side and the phase of the wobble on the outer radius side, forming the groove, are identical and a land track address system defined by including opposite-phase wobbles wherein the phase of the wobble on the inner radius side and the phase of the wobble on the outer radius side, forming the groove, are reversed, and the address information of the land includes two address systems, which are a land track address system defined by in-phase wobbles wherein the phase of the wobble on the inner radius side and the phase of the wobble on the outer radius side, forming the land, are identical and a groove track address system defined by including opposite-phase wobbles wherein the phase of the wobble on the inner radius side and the phase of the wobble on the outer radius side, forming the land, are reversed,
the optical disk device comprising:
address reading means for reproducing the wobble of the groove track address system to read address information when tracing a land track; and
determination means for determining that the groove track address system is normal when the address information satisfies a predetermined relationship and determining that the groove track address system is defective when the address information does not satisfy the predetermined relationship.

4. An optical disk device according to claim 3, wherein
the determination means determines that the predetermined relationship is satisfied when address information of the land track which is determinate and fixed is n and the address information of the groove track address system is n or n+1.
